# EUROPEAN PATENT APPLICATION

(11) **EP 1 884 278 A1**
(43) Date of publication of application: **06.02.2008**
(21) Application number: 06015337.6
(22) Date of filing: 24.07.2006
(51) Int. Cl.: B01D 61/02, B01D 61/08, B01D 61/04, C02F 1/44, C25D 21/20

(54) **Apparatus and method for rinsing of liquid from work pieces**

(71) Applicant: ATOTECH Deutschland GmbH, 10553 Berlin (DE)
(72) Inventor: Klaus Hechler Estr. Vereador Norberto Viera Diniz,, CEP 06844-005, Embu-SP (BR); Martin Horstmann, CEP 06843-151, Embu-SP (BR); Mota Vavalcante, Sergio, Bairro Santa Paula, CEP 09541-450 (BR)
(74) Representative: Patentanwälte Bressel und Partner

(57) **Abstract**

The invention relates to an apparatus and to a method for rinsing off liquid from work pieces which have been treated in a treatment bath, the apparatus comprising: at least one rinsing device (200); at least one filtration unit (300); at least one first fluid connection device (800) between the at least one rinsing device (200) and the at least one filtration unit (300) for transferring a rinse liquid from the at least one rinsing device (200) to the at least one filtration unit (300); and at least one second fluid connection device (700) between the at least one filtration unit (300) and the at least one rinsing device (200) for transferring a permeate liquid from the at least one filtration unit (300) to the at least one rinsing device (200); wherein the device further comprises: at least one third fluid connection device (900) between the at least one filtration unit (300) and the treatment bath for transferring a concentrate liquid from the at least one filtration unit (300) to the treatment bath.

## Description

### Description of the Invention:

The invention relates to an apparatus and to a method of rinsing off liquid from work pieces which have been treated in a treatment bath. Such apparatus and methods are common in the electroplating of parts, for example of printed circuit boards or of plastics parts, more specifically for decorative purposes.

The processes of electrolytic deposition of metal on the surface of work pieces require the use of various treatment steps. Such pieces have to be treated and for this to occur, passed from one process step to the next. Between the individual process steps, the parts will be rinsed in order to avoid that chemical species used in one treatment step are carried over to a treatment solution used in another treatment step. For rinsing, the parts are normally immersed into a tank containing water, or they are contacted with water by spraying same onto the surface of the parts. The water to be used for rinsing the parts has normally to be replaced frequently to avoid a too high concentration of carried-over contaminants. To keep the concentration of contaminants in a rinse below an unacceptable level, a continued flow of fresh water into the rinse may be set-up and maintained if a rinse tank is used. Any overflow of water from such rinse tank due to continuous inflow of fresh water will be discarded to a waste water treatment facility. Thus, while any contamination will effectively be removed from the rinse liquid and from the rinsed parts in such facility, much energy and chemicals are afforded and waste to be deposited is produced.

Therefore it has been an object to recover potentials recyclable from the waste water or at least to minimize flow of fresh water in order to save resources.

US Patent No. 5,403,490, DE 100 24 239 C1 and DE 101 48 632 C1 describe respective methods which may be used for the recycling of metals, used in the plating processes, from rinsing stations to which such metals are carried over.

US Patent No. 5,403,490 relates to an improved process and apparatus for removing solutes from solutions. Such process is told to be applicable in the electroplating industry, more specifically in the treatment of rinse water. A solution contained in a rinse tank is first treated in a precipitation tank. Nickel ions for example are precipitated in such tank as nickel oxide and nickel hydroxide. The resultant mixture of precipitate and aqueous solution is filtered to remove the precipitate. The filtrate is delivered to a concentration device which may be a reverse osmosis unit. This unit produces a permeate liquid, which is an aqueous stream essentially free of metal ions, and a concentrate liquid, which is an aqueous solution enriched in metal ions. The permeate liquid is delivered to the rinse tank.

DE 100 24 239 C1 discloses a method of treating parts with a palladium colloid solution for plating purposes. This document outlines that the surfaces of electrically non-conducting plating parts must first be treated to render them electrically conductive. For this purpose the plating parts are dipped into a solution containing colloidal palladium. The palladium particles thereupon adsorbed on the surfaces of the parts serve as an activator for initiating electroless metal deposition, which results in the production of an electrically conductive layer on the surface of the plating parts. This conductive layer may afterwards be electroplated with any metal. This process may for example be applied to the production of printed circuit boards as well as to the manufacture of sanitary appliances, metallized parts for automotive industry and of furniture mountings, especially for chromium plating of plastics parts. If plating parts provided with electrically non-conducting surfaces are treated in an activating solution and thereafter removed from it, the solution partly adheres to the surfaces of the pieces. This adhering solution is normally rinsed off with water. For example, for activating the plating parts, about 5 mg of palladium are told to be adsorbed to the plastics parts per one square meter. If the plating parts to be treated are removed from the respective treatment station, about 0.2 liter activating solution are left on each square meter of the surface of the plating parts, this remaining solution being dragged out. For this reason from about 10 to about 20 mg palladium are lost per square meter of surface area of the plating parts by drag-out from the activating solution. For mitigating this problem a membrane filter is proposed to receive the rinse water and to create a permeate flow and a concentrate flow by membrane filtration. It has proved advantageous to use a membrane filter having a pore exclusion size of from 200 Dalton to 10,000 Dalton. The membrane filter is disclosed to preferably be made from polysulfone, perfluorinated polymers and ceramics.

DE 101 48 632 C1 likewise refers to the membrane filtration of rinse water containing noble metal activator species, more specifically palladium colloid species. This document recommends contacting the plating parts with the palladium containing activator solution, thereafter removing a remainder of the activating solution from the surface of the parts using rinse liquid und finally filtrating the rinse liquid by means of a membrane filter and thus creating a permeate liquid and a concentrate liquid. The permeate liquid is discarded, and precipitate from the concentrate liquid is collected.

The above methods used for the treatment of rinse water do not provide the required efficiency because they afford additional chemicals and hence produce waste chemicals which must be deposited at a high cost.

It is therefore an object of the present invention to provide an apparatus for rinsing off liquid from the surface of work pieces which have been treated in a treatment bath, more specifically in an electroplating bath.

It is another object of the invention to provide an apparatus for removing contaminants from the liquid used to rinse the work pieces.

It is still another object of the invention to provide an apparatus which makes it possible to do without additional chemistry when contaminants are removed from the rinse liquid.

It is still another object of the invention to provide an apparatus which allows operating the rinsing devices in a closed-loop system.

It is still another object of the invention to more specifically provide an apparatus for removing nickel ions from a rinse liquid and for recycling the rinse liquid free of nickel ions to a rinsing station.

It is still another object of the invention to provide a method of rinsing off liquid from work pieces which have been treated in a treatment bath, more specifically in an electroplating bath.

These objects and further objects are achieved by the apparatus according to Claim 1 and by the method according to Claim 15. Preferred embodiments of the invention are described in the sub-claims.

Referring to the below definitions, both the singular and the plural form will be comprised.

As used herein, "treatment bath" means a liquid volume which is used to treat a work piece by means of electroplating, electroless or any other process, in which electrolytic solutions are used, such as anodizing, passivating, staining, cleaning, conditioning, immersion plating and the like. As used herein, the term "treatment bath" more specifically means an electroplating bath, *i.e.,* a bath for the electrodeposition of a metal. Most preferably such metal is nickel. However, it will be well understood that other metals may likewise be electrodeposited in such treatment bath, like copper, silver, gold, palladium, platinum, rhodium, iron, cobalt, tin, lead, zinc, cadmium, chrome. Of course the alloys of any of afore mentioned metals among each other and/or with other elements, like phosphorous or boron, may also be electrodeposited with such treatment bath.

As used herein, "plating bath" means a liquid volume which is used to deposit a metal to the surface of a work piece with or without flowing an electric current between such work piece, polarized as a cathode, and an anode. If metal is deposited only if an electric current is flowing between the work piece and the anode, the plating bath is an "electroplating bath" ("electrodeposition bath"), as defined herein. If metal is deposited even if no current is flowing, the plating bath is an "electroless plating bath" or an "immersion bath".

As used herein, "electrochemical deposition means" means a device which is required to deposit metal by electrodeposition, such as an electric current source and an anode and a cathode being connected to said electric current source.

As used herein, "rinse liquid" means a liquid which is used to remove any treatment liquid from the surface of the work pieces after treatment thereof has been accomplished. In general water is used as the rinse liquid for this purpose. The rinse liquid may be applied to the surface of the work pieces by immersing the work pieces into a rinse bath or by spraying rinse liquid to the surface of the work pieces. Such operations are performed in a rinsing station.

As used herein, "contaminant" means any chemical species contained in the rinse liquid other than the rinse liquid. Such contaminant may be the main component of the treatment bath, the metal ions of a metal electrodeposition bath for example, more specifically nickel ions. Such contaminant/s will also be referred to as "main component/s". The contaminants may also be any components which will not be desirable to be contained in the treatment bath, such as for example Fe(III) ions.

As used herein, "ultrafiltration" means a membrane separation technique which is capable of separating particles from each other which have a size of about 15 to about 2000' , such as polymers, proteins and colloids, the molecular weight thereof being from about 5000 Dalton to about 5 · 10⁶ Dalton. For this purpose microporous membranes are used which have a pore size of from about 1 to about 50 nm. In general, the membranes are made of a variety of polymers or polymer blends, such as polysulfones, polyethersulfones, polyvinylidenefluorides and polyimides. Likewise ceramics, such as α- and γ-Al₂O₃ may be employed. Separation of the particles is mainly effected by size exclusion.

As used herein, "reverse osmosis" means a membrane separation technique which is capable of separating even the smallest solute molecules from a solvent. Separation of the particles is effected by a pressure difference. The membrane materials which are used for reverse osmosis are similar to those which are used for ultrafiltration. The reverse osmosis technique is characterized by a high pressure to be applied across the membrane.

Both, "ultrafiltration" and "reverse osmosis" are described more elaborately in: Kirk-Othmer, Encyclopedia of Chemical Technology, John Wiley & Sons, New York, 4th ed., 1998, pp. 373-386; and J.J.McKetta, G.E.Weismantel, Encyclopedia of Chemical Processing and Design, Marcel Dekker, Inc., New York, 1997, pp. 603 *et seq.*

As used herein, "nanofiltration" means a membrane separation technique which is between the ultrafiltration and reverse osmosis techniques. Nanofiltration is capable of rejecting neutral particles which have a molecular weight of more than 200 g/mole as well as multivalent salts. This is due to the fact that separation of the particles is effected both by size exclusion and by electrostatic interaction. The pore size of the membranes is typically about 2 nm. The membranes are made of a variety of polymers or polymer blends, such as of polyamides and polyacetals. (andere Definition, da mit der Wirkung widersprüchlich ? [Abtrennung von Chloride])

As used herein, "high-pressure pump" means a pump which operates at a pressure of at least 10 bar, more specifically at least 15 bar.

As used herein, "fluid connection device" means any device which is capable of transferring a liquid from one location to another location. Such device may typically be a pipe and may additionally comprise a pump, a filter, an additional tank or any other device which is capable of transferring, delivering or holding the liquid.

The apparatus of the invention serves to rinse off liquid from work pieces which have been treated in a treatment bath. Any remainder of the treatment liquid will be removed from the surface of the work pieces by rinsing the same. Thus such remainder of the treatment liquid will be carried over to the rinse liquid, thereby contaminating the same with the components of the treatment liquid. If the treatment liquid is used for electroplating nickel such treatment liquid may *inter alia* contain nickel ions, sulfate ions, chloride ions and boric acid. By rinsing the work pieces such contaminants will successively accumulate in the rinse liquid.

For achieving the objects of the invention, *i.e.*, removing the contaminants, more specifically nickel ions and other contaminants resulting from a Watts nickel electroplating treatment, from the liquid used to rinse the work pieces without any additional chemistry and allowing operating the rinsing device in a closed-loop system, the apparatus comprises a) at least one rinsing station; b) at least one filtration unit; c) at least one first fluid connection device between the at least one rinsing station and the at least one filtration unit for transferring the rinse liquid from the at least one rinsing station to the at least one filtration unit; further d) at least one second fluid connection device between the at least one filtration unit and the at least one rinsing station for transferring a permeate liquid from the at least one filtration unit to the at least one rinsing station; and e) at least one third fluid connection device between the at least one filtration unit and the treatment bath for transferring a concentrate liquid from the at least one filtration unit to the treatment bath.

Accordingly, by using the apparatus of the invention it will be possible to run the method of the invention, which method serves the rinsing off liquid from the surface of work pieces which have been treated in a treatment bath. This method consequently comprises the following method steps: a) rinsing a work piece with a rinse liquid, said liquid being contained in a rinsing station; b) transferring the rinse liquid to at least one filtration unit; c) conveying the rinse liquid through the at least one filtration unit, so that a permeate liquid and a concentrate liquid are generated; d) transferring the permeate liquid from the at least one filtration unit to the at least one rinsing station; and e) transferring the concentrate liquid from the at least one filtration unit to the treatment bath.

The rinse liquid being contaminated may thus be transferred to a filtration unit via the first fluid connection device. In the filtration unit the rinse liquid is separated into two fractions: one first fraction being virtually pure solvent, typically water, and one second fraction containing, in addition to the solvent, the contaminants which typically originate from the treatment bath. The first fraction will be a permeate liquid and the second fraction will be a concentrate liquid. Hence, the filtration unit removes contaminants from the rinse liquid and concentrates same in the concentrate liquid. Thus the permeate liquid generated will contain virtually no contaminants or only a low level thereof. The apparatus of the invention is further designed to transfer the permeate liquid via the second fluid connection device to the rinsing device. Moreover the concentrate liquid will be transferred via the third fluid connection device to the treatment bath.

With such method and apparatus it will be possible to remove any contaminant from the rinse liquid and to run it in a closed-loop system. Hence, less chemicals and no additional chemicals will be required to maintain the process of regenerating the rinse liquid. Furthermore, waste treatment is reduced due to decreased amount of waste liquid. In addition, less fresh rinse liquid is required. All in all, an overall reduction in costs will be achieved when operating the apparatus of the invention.

The volume ratio of the permeate liquid to concentrate liquid may be adjusted according to the needs: Adjustment of the ratio may be performed by adjusting the pressure difference across the membranes. If, for example, pressure difference across the membrane is increased, more liquid will pass through the membranes and consequently higher concentration of the contaminants in the concentrate liquid will take place. The volume ratio will be higher then. If, conversely, the pressure difference across the membrane is decreased, less liquid will pass through the membranes and consequently less concentration of contaminants in the concentrate with take place. The volume ratio will be lower then. Such adjustment may be performed by setting respective valves downstream of the filtration unit in the second and third connection devices. Thence, by adjusting the volume ratio of the permeate liquid to concentrate liquid the ratio of contaminant species contained in the permeate liquid on the one hand and in the concentrate liquid on the other hand may be set. In general, the flow level of the concentrate liquid will be set low relative to the flow level of the permeate liquid.

In addition to the volume ratio of the permeate liquid to concentrate liquid, the level of contaminant species contained in the permeate liquid will also depend on the type, on the number of filtration devices used in the filtration unit and on the contamination of the filtration devices occurring gradually during operation: The larger the number of filtration units is, the lower is the contaminant level in the permeate liquid.

In a preferred embodiment of the invention at least one filtration unit is selected from the group comprising a nanofiltration unit and a reverse osmosis unit. By selecting such filtration units it will be possible to remove any contaminant from the rinse liquid, including *inter alia* cationic and anionic species, such as nickel ions, sulfate ions, chloride ions, borate ions and the dehydrated species thereof, further organic molecules, such as brightener molecules, more specifically saccharin. Hence the permeate will, if any of a nanofiltration or reverse osmosis unit is used, virtually exclusively be comprised of water if a Watts nickel electroplating bath is used as the treatment bath and the rinse liquid accordingly will contain these contaminants. The concentrate in turn will contain the above species dissolved in water, however being at a higher concentration than in the rinse liquid.

Nanofiltration has proved efficient in removing nickel, sulfate, chloride and borate ions from the permeate liquid and in concentrating same in the concentrate liquid. Nanofiltration units require a lower pressure difference across the membrane and thus afford less energy consumption during operation than reverse osmosis units. Therefore nanofiltration units are preferred over reverse osmosis units.

For operating the at least one filtration unit, same comprises a high-pressure pump and at least one filtration device downstream from the high-pressure pump. The at least one filtration device may be a nanofiltration membrane or a reverse osmosis filtration membrane. Such membranes may be for example Osmonics Desal membranes and can be purchased from Lenntech/Delft, NL. Suitable membranes are for example Osmonics Desal membranes of the DK and DL series, such as DK4040F.

In a preferred embodiment of the invention the at least one filtration unit further comprises a booster pump and a pre-filter downstream from the booster pump. Using a booster pump in addition to the high-pressure pump allows increased pump efficiency. The pre-filter downstream of the booster-pump will protect both the high-pressure pump and the filtration devices. If for example large particles would be allowed to arrive at the membrane filtration devices, same could be destroyed.

In a further preferred embodiment of the invention the at least one rinsing device comprises a cascade of rinse tanks: A first rinse tank is a fresh-water rinse tank, a second rinse tank is an intermediate rinse tank and a third rinse tank is a drag-in rinse tank. These three rinse tanks are preferably assembled together such that rinse liquid may overflow from one rinse tank to the other: More specifically, rinse liquid, more preferable fresh rinse liquid and most preferable fresh water, is introduced into the fresh-water rinse tank. Rinse liquid is allowed to flow from the fresh-water rinse tank to the intermediate rinse tank and from the intermediate rinse tank to the drag-in rinse tank. As work pieces in this configuration are preferably brought into contact first with the rinse liquid contained in the drag-in rinse tank, then with the rinse liquid contained in the intermediate rinse tank and finally with the rinse liquid contained in the fresh-water rinse tank, contaminant level will be higher in the rinse liquid contained in the drag-in rinse tank than in the rinse liquid contained in the intermediate rinse tank and higher in the rinse liquid contained in the intermediate rinse tank than in the rinse liquid contained in the fresh-water rinse tank. According to the above indications as to the direction of flow of rinse liquid in the cascade on the one hand and to the direction of successive conveyance of work pieces to be immersed into the rinse liquid in the rinse tanks of the cascade, the work piece conveyance direction is opposite to the rinse liquid flow direction.

Using the cascade of rinse tanks the second fluid connection device may advantageously be provided between the at least one filtration unit and the fresh-water rinse tank or, alternatively, between the at least one filtration unit and the drag-in rinse tank. Virtually pure permeate liquid will advantageously be replenished to the fresh-water rinse tank of the cascade. If the flow of rinse liquid flowing in the second fluid connection device equals the flow of rinse liquid between the rinse tanks of the cascade a stationary state may be attained.

If a rinse cascade is used, the first fluid connection device between the rinsing device and the filtration unit may preferably be provided between the drag-in rinse tank and the filtration unit. As the drag-in rinse tank will contain rinse liquid containing the highest contaminant level, compared with the rinse liquid contained in the fresh-water and intermediate rinse tanks, a respective "pre-concentration" has already taken place in this rinse tank. Therefore delivering the rinse liquid from the drag-in rinse tank to the filtration unit will be advantageous compared with delivering same from any of the other rinse tanks to the filtration unit. Delivering the rinse liquid to the filtration unit may be performed by using a continuous overflow of rinse liquid to the first fluid connection device.

Further an auxiliary tank is provided, said auxiliary tank being connected via fluid connection devices to the at least one filtration unit, to the at least one rinsing device and to the treatment bath. Concentrate liquid will preferably be delivered to the auxiliary tank and from there again to the filtration unit. Thus, the concentrate liquid will in this embodiment of the invention be circulated discontinuously or continuously between the filtration unit and the auxiliary tank. As a consequence the level of contaminants in the concentrate will steadily rise. Rinse liquid may be delivered continuously or discontinuously from the rinsing station to the auxiliary tank and will accordingly dilute the concentrate liquid contained therein. Since the volume of the concentrate liquid and/or the level of contaminants in the concentrate liquid will consequently rise, part of the concentrate liquid will be branched off of this circuit and delivered to the treatment bath. Such branching-off may preferably be performed discontinuously, for example once the concentration of a main component, for example nickel ions, in the concentrate liquid exceeds a (predetermined) minimum threshold value.

Hence, the third fluid connection device connecting the filtration unit and the treatment bath may also comprise the auxiliary tank.

In addition, a recuperation tank for the main component of the treatment bath may be provided, said recuperation tank being connected via fluid connection devices to the auxiliary tank. This tank may be used for recuperating main components contained in the concentrate liquid which is contained in the auxiliary tank. If the main components are for example metal ions (if the treatment bath is an electroplating bath) the metal ions may be recovered by electrodeposition of the respective metal. For such purpose the recuperation tank is equipped with an electrochemical deposition means. Recovery of the main components may be required or at least advantageous, if for example reflow of concentrate liquid to the treatment bath may not be possible, because the liquid level in the respective tank is too high.

Further, means for dosing an acid, for example sulfuric acid, to the rinse liquid may be provided in order to prevent detrimental precipitation of contaminant contained in the rinse liquid. The dosing means may for example comprise a dosing pump for the acid. If the treatment bath is a Watts nickel electroplating bath, such contaminant may be iron ions, more specifically Fe(III) ions, which may easily form voluminous iron oxide/hydroxide precipitates even at a moderate acidic pH. Such precipitate might destroy the filtration devices or at least impede further filtration. In an especially preferred embodiment such dosing may be performed into the drag-in rinse tank, because in this rinse tank contaminant level will be the highest compared with the other rinse tanks of a rinse cascade.

In order to operate such dosing means automatically, the dosing means may further comprise a pH control means and a control system for the dosing pump. If the pH exceeds a critical value the pH control means and the control system detect such exceedance and trigger the dosing pump to lower the pH in the rinse liquid.

If both, an auxiliary tank and a recuperation tank, are provided in the apparatus of the invention, permeate liquid will preferably be transferred to the fresh-water rinse tank. Such transfer of the permeate liquid is advantageous because the permeate liquid will virtually be pure rinse liquid and thus prominently be dedicated for replenishing the rinse cascade at the fresh-water rinse tank.

If on the other hand none of an auxiliary tank and a recuperation tank are provided for in the apparatus of the invention, permeate liquid will preferably be transferred to the drag-in rinse tank of the rinse cascade. This will be advantageous because discharging the permeate into the drag-in rinse liquid will lower the concentration of metal and of other contaminants in this rinse liquid. If for example concentration of nickel and of the additives of a nickel bath will be too high, the parts' surface could be passivated. This would cause defects in further chrome deposition on the parts' surface.

If the membranes of the filtration devices, more specifically the pre-filter, close down due to contamination, the flow rate of the concentrate liquid delivered by the filtration unit will decrease. Therefore the flow rate of the permeate liquid will decrease accordingly. Hence from time to time a so-called flash may be applied to the filtration devices, such flash comprising opening completely third fluid connection devices to allow the concentrate liquid to flow freely. Consequently the filtration devices will be cleaned. Such flash may be initiated by a time operated flash-relays-valve.

Further a regeneration tank may be provided, said regeneration tank being connected via at least one fourth fluid connection device to the at least one filtration unit. After a predetermined time period the apparatus has been operated, the membranes in the filtration devices may be regenerated using a regenerant which is contained in said regeneration tank. If any Fe(III) contamination is to be removed from the membranes, sch regenerant may be a regenerating solution, for example citric acid. The regenerant may be pumped from the regeneration tank through the filtration unit and circulated back to the regeneration tank. After regeneration of the filtration unit, same is rinsed with a rinse liquid. Said liquid will be discarded to the waste treatment station.

In a further embodiment of the invention an atmospheric evaporator device is provided, said atmospheric evaporator device being connected via a fluid connection device to the treatment bath. This evaporator device is used to evaporate the treatment liquid of the treatment bath. Such evaporation will be necessary if the bath level of the treatment bath exceeds a predetermined value such that the liquid runs the risk of overflowing the treatment tank. Evaporation will be required to assure that all of the main components contained in the concentrate liquid be returned to the treatment tank. Especially if volume flow of the concentrate liquid is higher than drag-out or normal evaporation of the electrolyte, additional evaporation will be required in the atmospheric evaporator device.

The invention will be described more clearly with reference to the following figures and examples. The embodiments shown in the figures and the examples are not intended to limit the scope of the invention.
- Fig. 1: shows a schematic representation of the apparatus of the invention according to a first embodiment of the invention;
- Fig. 2: shows a schematic representation of the apparatus of the invention according to a second embodiment of the invention;
- Fig. 3: shows a schematic representation of the apparatus of the invention according to a third embodiment of the invention.

Like reference numerals used throughout this application denote the same items. All embodiments shown by example relate to the treatment of plating parts with a nickel electroplating method, more specifically with a Watts-Nickel electroplating method, and the rinsing thereof.

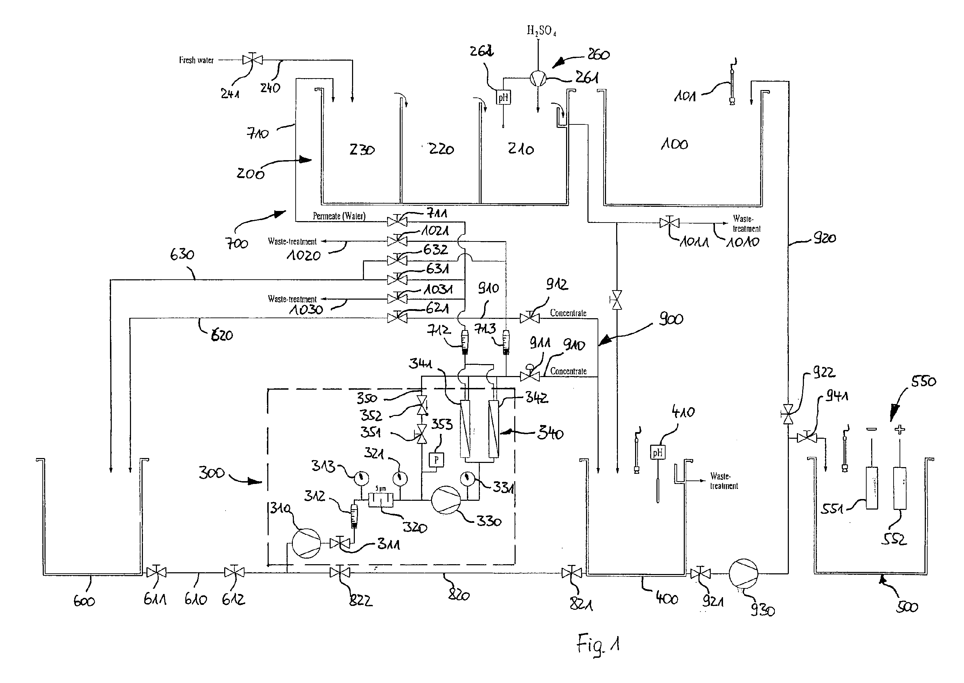

Fig. 1 illustrates a first embodiment of the invention comprising a nickel electroplating tank 100. Nickel electroplating tank 100 is equipped with suitable devices, exemplified with sensor probe 101. In addition, this tank 100 comprises anodes and other equipment assemblies such as filter units (not shown). The nickel electroplating tank 100 accommodates a nickel electroplating bath. Plating parts (not shown) are immersed into the electroplating tank 100 one after the other.

After electroplating of a plating part has been finished, this part is removed from the electroplating tank 100 and transported to the rinsing device 200. Rinsing device 200 is comprised of a cascade of three rinse tanks, *i.e.,* a drag-in rinse tank 210, an intermediate rinse tank 220 and a fresh-water rinse tank 230. The plating part is immersed first into the rinse water in the drag-in rinse tank 210, after having rinsed off electroplating liquid from the surface of the part, then into the intermediate rinse tank 220 and, after having rinsed off contaminated rinse water from the drag-in rinse tank 210 from the surface thereof in the intermediate rinse tank 220, into the fresh-water rinse tank 230. In this latter rinse tank 230 less contaminated rinse water from the intermediate rinse tank 220 is rinsed off, to finally yield a well purified surface of the plating part virtually completely void of any contaminants originating from the nickel electroplating bath.

A fresh-water line 240 is provided to replenish discontinuously or continuously fresh water to the fresh-water rinse tank 230. Valve 241 serves to connect with or disconnect supply of fresh water from a fresh-water source. In addition a second fluid connection device 700 is provided to deliver permeate water from filtration unit 300 to the rinsing device 200. Device 700 is a pipe 710 which connects the rinsing device 200 and the filtration unit 300. Volume flow in pipe 710 may be indicated using flow indicator 712.

As fresh water and/or permeate water are discontinuously or continuously replenished to the fresh-water rinse tank 230, as the rinse water contained in the fresh-water rinse tank 230 overflows to the intermediate rinse tank 220 and as the rinse water contained in the intermediate rinse tank 220 overflows into the drag-in rinse tank 210, excess volume is removed from the drag-in rinse tank 210 by overflow. Such purpose serves an overflow compartment 250. The overflow leaving the drag-in rinse tank 210 via the overflow compartment 250 will be transferred via the first fluid connection device 800 to the filtration unit 300. The first fluid connection device 800 is comprised of a pipe 810, an auxiliary tank 400 and a pipe 820. The overflow leaving the drag-in rinse tank 210 may also be delivered to a waste water treatment facility (not shown) via pipe 1010, this pipe 1010 being connected with or disconnected from the first fluid connection device 800 by a valve 1011.

Rinse water flows from the fresh-water rinse tank 230 to the intermediate rinse tank 220 and from the intermediate rinse tank 220 to the drag-in rinse tank 210. As contaminants are steadily brought into the drag-in rinse bath due to immersing the plating parts having nickel electroplating solution at the surface thereof into this bath, the drag-in rinse bath will contain contaminants, *i.e.*, nickel ions, sulfate ions, chloride ions, boric acid and organic additives as well as further contaminants, such as Fe(III), at a relatively high level, since these contaminants accumulate by and by due to the drag-in of electroplating liquid in this bath. On the other hand, as fresh water and/or virtually pure permeate water is replenished to the fresh-water rinse bath via the second fluid connection device 700, this bath contains the above contaminants at a much lower level than the drag-in rinse bath. Hence, the intermediate rinse bath contains the above contaminants at an intermediate level.

Further, a dosing means 260 is provided at the drag-in rinse tank 210. This dosing means 260 is comprised of a dosing pump 261 and a pH sensing means 262. Dosing pump 261 provides sulfuric acid to the drag-in rinse bath to provide this bath with an appropriately low pH in order to prevent precipitation of basic iron species such as iron(III) hydroxide, which would clog pre-filter 310 in the filtration unit 300. For triggering the dosing pump 261, pH meter 262 senses the pH of the drag-in rinse bath and triggers the dosing pump 261 once the pH is higher than a threshold value, e.g., 2.8.

Contaminated rinse bath from the drag-in rinse tank 210 overflows via the overflow compartment 250 and first fluid connection device 800, *i.e.,* pipe 810, auxiliary tank 400 and pipe 820, to the filtration unit 300. Filtration unit 300 comprises a booster pump 310, a pre-filter 320 having a filter with pore size 5 µm, a high-pressure pump 330 and filtration devices 340. The filtration devices 340 in turn comprise two filtration tubes 341, 342, which are concentric tubes with an outer tube and an inner tube each, the inner tube being a filtration membrane, respectively (not shown). The contaminated rinse water overflowing from the drag-in rinse tank 210 is first pre-pressurized by the booster pump 310 up to a pre-pressure of about xy bar, then pre-filtered with the pre-filter 320 to retain any particulate matter, thereafter brought to a high pressure of at least 10 bar using the high-pressure pump 330 and finally delivered to the inner tubes of the filtration devices 340. Due to a large pressure difference between the interior space of the inner tube and the exterior space between the inner tube and the outer tube of the filtration devices 340 water passes through the inner tube to the exterior space between the inner tube and the outer tube. Contaminants though are not allowed to pass through the inner tube, thus remaining in the water being delivered to the filtration devices 340. Consequently the concentration thereof will rise in this water flow thus forming a concentrate liquid, while the water passing through the inner tube to the exterior space between the inner tube and the outer tube will form a permeate liquid. Depending on the valve setting of valves 711 on the one hand and 911, 912 on the other hand, which will adjust the pressure difference across the filtration membranes, the respective flow rates of the permeate liquid and of the concentrate liquid will be adjusted: If valves 911, 912 will be closed relative to valve 711, the pressure difference will increase due to the back pressure of water contained in the inner tubes of the filtration devices. Then the flow rate of the concentrate liquid will be much lower than the flow rate of the permeate liquid. Moreover, the flow rates vary depending on the number of membranes used and of the contamination of the membranes.

A flow indicator 312 indicates liquid flow through filtration unit 300. Pressure gauges 313, 321 indicate proper operation of the pre-filter 320: Clogging of the pre-filter will be indicated by a too strong rise of the pressure difference indicated by the pressure gauges 313, 321. Further pressure indication with pressure gauge 331 indicates proper operation of the high-pressure pump 330. A closed-loop is comprised in the filtration unit 300, this closed-loop being formed by pipe 350 and may be closed with valves 351, 352, valve 351 being switch with pressure switch 353.

Permeate liquid will be transferred via the second fluid connection device 700, notably pipe 710, to the fresh-water rinse tank 230. Concentrate liquid will be transferred via a third fluid connection device 900 to the nickel electroplating tank 100. This fluid connection device 900 is comprised of pipes 910, auxiliary tank 400 and pipe 920. Pipe 920 connects the auxiliary tank 400 with the electroplating tank 100. Valves 921, 922 may connect the auxiliary tank 400 with or disconnect same from the electroplating tank 100. Further pump 930 serves the delivering the concentrate liquid to the electroplating tank 100.

If valve 821 is open and valve 921 is closed, concentrate liquid will be circulated between the filtration unit 300 and the auxiliary tank 400. Such circulation will take place from the filtration devices 340 via pipes 910, auxiliary tank 400 and pipe 820 to the booster pump 310, where it is pre-pressurized, then delivered to the pre-filter 320 and further pressurized with high-pressure pump 330 to be delivered again to the filtration devices 340. Due to the circulation of the concentrate liquid the concentration of the contaminants therein will increase. A pH sensing probe 410 is used to watch the pH of the liquid contained in this tank 400. As soon as the concentrations of the contaminants have attained a predetermined level, the concentrate liquid contained in the auxiliary tank 400 is pumped using pump 930 to the electroplating tank 100 to replenish the electroplating bath with the main components contained in the concentrate liquid.

Alternatively concentrate liquid contained in the auxiliary tank 400 may also be transferred to a recuperation tank 500 via pipe 920 and junction 940. This tank 500 comprises an electrochemical deposition means 550, *i.e.,* a cathode 551 and an anode 552. The cathode 551 and the anode 552 are electrically connected to a current source (not shown). Thus, nickel may be deposited on the cathode 551 and finally be recovered.

If the flow rates of the concentrate liquid through the third fluid connection device 900 and the permeate liquid through the second fluid connection device 700 will decrease too much this will evidence that the membranes of the filtrations devices 340 are closing down due to excess contamination thereof. As a remedy a so-called flash will be applied to the filtration devices 340 from time to time. Such flash will be initiated by opening completely the third fluid connection device 900 by opening the valves 911, 912 (flash-relays valve) completely.

After a certain time of operation of the apparatus, the filtration membranes of the filtration devices 340 will have to be regenerated with a regeneration solution, which may be citric acid. For this purpose the regeneration solution is stored in a regeneration tank 600 and pumped through the filtration unit 300. For this purpose the regeneration solution is circulated between the regeneration tank 600 and the filtration unit 300 by transferring same from the regeneration tank 600 via pipe 610 to the filtration unit 300 and from there via pipes 620, 630 back to the regeneration tank. Valves 611, 612, 621, 632 are opened then, while valves 631, 711, 821, 822, 911, 912 are closed. After regeneration of the filtration devices 340 same are rinsed with water, this water being discharged to a waste water treatment facility (not shown). For this purpose the rinse water is transferred via pipe 1020 to the treatment facility. Valve 1021 is opened while valves 621, 631, 632, 711, 821, 822, 911, 912 are closed.

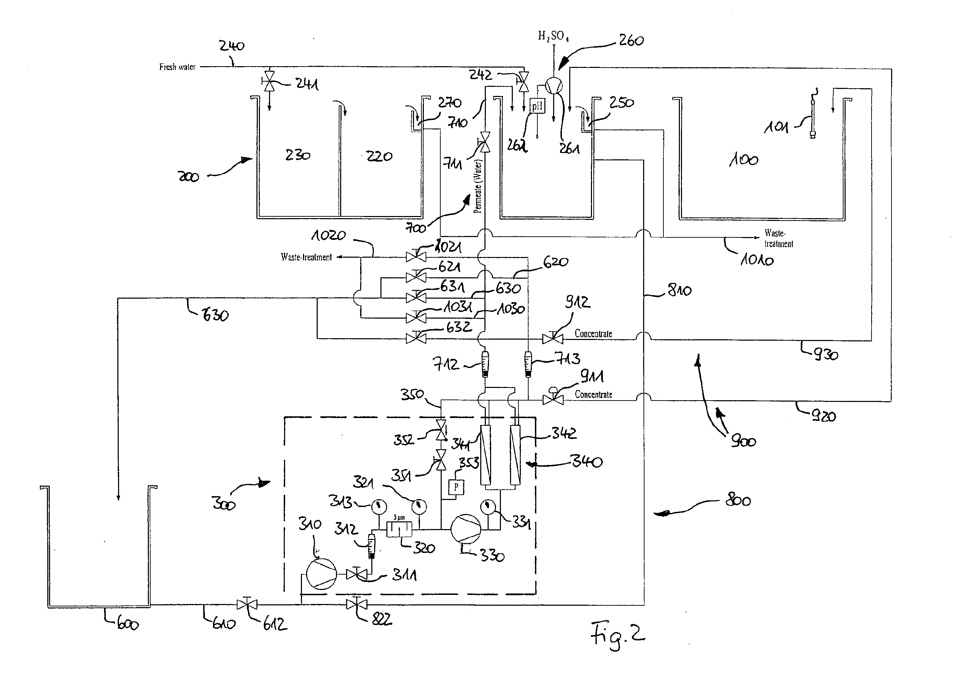

Referring now to Fig. 2, an electroplating nickel bath 100 and a cascade 200 of rinse tanks 210, 220, 230 are provided for the treatment of plating parts. The filtration unit 300 is equipped as that of the apparatus of Fig. 1. A regeneration tank 600 is provided to regenerate the filtration devices 340 as described with respect to Fig. 1.

Contrary to the apparatus of Fig. 1 the cascade 200 of rinse tanks 210, 220, 230 is designed such that first fluid connection device 800 does not collect the rinse water from the drag-in rinse tank 210 at an overflow compartment 250 but at about the half height of this rinse tank 210 to transfer same via pipe 810 to the filtration unit 300 directly, *i.e.*, without passing by an auxiliary tank. Such auxiliary tank is not provided for in this embodiment. Permeate liquid produced by the filtration unit 300 is transferred via the second fluid connection device 700, *i.e.*, via pipe 710 to the drag-in rinse tank 210 instead of to the fresh-water rinse tank 230. This again is contrary to the configuration of the respective apparatus shown in Fig. 1 and offers the advantage that the concentration of contaminants in the drag-in rinse tank 210 will be kept low. The low contamination of the rinse bath in this tank 210 will moreover be attained by delivering fresh water not only into the fresh-water rinse tank 230 but also into the drag-in rinse tank 210. To select fresh water delivery to between fresh-water rinse tank 230 and drag-in rinse tank 210, appropriate valves 241, 242, respectively, are provided.

Contrary to the apparatus shown in Fig. 1, concentrate liquid produced by the filtration unit 300 is directly delivered to the electroplating tank 100 via third fluid connection device 900, *i.e.*, pipes 920, 930.

Rinse liquid collected at overflow compartments 250, 270 at the drag-in rinse tank 210 and intermediate rinse tank 220, respectively, are directly transferred to a waste water treatment facility (not shown) via pipe 1010.

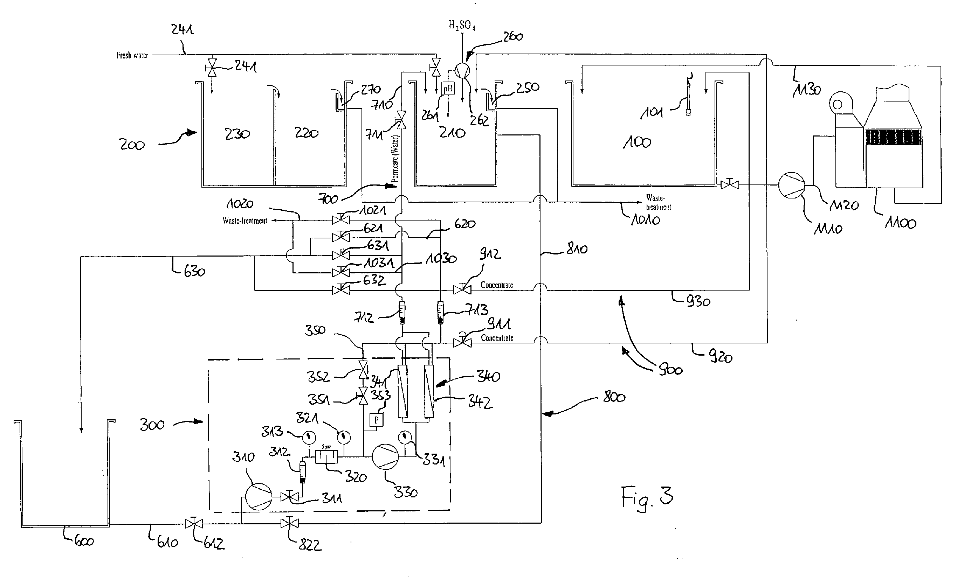

Referring now Fig. 3, an electroplating nickel bath 100 and a cascade 200 of rinse tanks 210, 220, 230 are provided for the treatment of plating parts. The filtration unit 300 is equipped as that of the apparatus of Fig. 1. A regeneration tank 600 is provided to regenerate the filtration devices 340 as described with respect to Fig. 1. Like the apparatus of Fig. 2, the cascade 200 of rinse tanks 210, 220, 230 is designed such that first fluid connection device 800 collects the rinse water from the drag-in rinse tank 210 at about the half height of this rinse tank 210 to transfer same via pipe 810 to the filtration unit 300 directly, *i.e.,* without passing by an auxiliary tank. Such auxiliary tank is not provided for in this embodiment either. Permeate liquid produced by the filtration unit 300 is transferred via the second fluid connection device 700, *i.e.,* via pipe 710, to the drag-in rinse tank 210. Fresh water is delivered not only into the fresh-water rinse tank 230 but also into the drag-in rinse tank 210. To select fresh water delivery between fresh-water rinse tank 230 and drag-in rinse tank 210, appropriate valves 241, 242, respectively, are provided.

Concentrate liquid produced by the filtration unit 300 is directly delivered to the electroplating tank 100 via third fluid connection device 900, *i.e.,* pipes 920, 930. Rinse liquid collected at overflow compartments 250, 270 at the drag-in rinse tank 210 and intermediate rinse tank 220, respectively, are directly transferred to a waste water treatment facility (not shown) via pipe 1010.

Additional to the apparatus shown in Fig. 2 an atmospheric evaporator device 1100 is provided. This device 1100 is connected to the electroplating tank 100 via a first pipe 1120 and a second pipe 1130, electroplating liquid being delivered from the electroplating tank 100 to the atmospheric evaporator device 1100 by means of a pump 1110. The atmospheric evaporator device 1100 serves to remove water from the electroplating liquid. In some cases the level of the electroplating tank 100 does not decrease though electroplating liquid is dragged out from this tank 100. This may be due to a large back current of concentrate liquid to the electroplating bath thus letting the level of electroplating liquid in tank 100 increase. By evaporating water from the bath, the level may be decreased.

Using the apparatus of Fig. 1 the following experiments were performed: A nickel Watts electroplating bath having a nickel concentration of 45-60 g/I was used to electroplate plating parts (nickel sulfate: 300 g/I, nickel chloride: 60 g/I), in this case sanitary appliances which were able to scoop much liquid from the electroplating bath to the rinsing device. The rinse liquid in the drag-in rinse tank 210 was transferred to the filtration unit 300 at an average flow rate of 300 I/h, the pH of the rinse liquid being from 3.0 - 4,5, a minimum pH being 2.5. The maximum temperature of the rinse liquid in the rinse tank 210 was 40°C. The average concentration of nickel in the rinse liquid was 6 g/I and the maximum concentration was 7.5 g/I. The permeate liquid was set to a volume flow of 270 I/h and the volume flow of the concentrate liquid was adjusted to 30 I/h. Thereupon the average nickel concentration in the permeate liquid was found to be 0.1 g/l and the respective average concentration in the concentrate liquid was found to be 12 g/I.

Further experiments were conducted under similar conditions at different points of time, the differences being due to drag out of electroplating liquid to the drag-in rinse tank and to contamination of the filtration devices 340. The results of the experiments are shown in Table 1.

**Table 1: Average nickel concentrations in the rinse, permeate and concentrate liquids with an overall flow of liquid to the filtration unit of 180 I/h and a volume flow of the concentrate liquid of 30 I/h and of the permeate liquid of 150 h/I:**

| Test No. | Nickel Concentration in Rinse Liquid [g/l] *) | Nickel Concentration in Concentrate Liquid [g/l] *) | Nickel Concentration in Permeate Liquid [l/h] *) |
|---|---|---|---|
| 1 | 6.00 | 24.05 | 0.26 |
| 2 | 8.8 | 25.23 | 0.09 |
| 3 | 8.77 | 21.71 | 0.18 |
| 4 | 7.62 | 20.53 | 0.22 |
| 5 | 5.86 | 14.67 | 0.13 |
| 6 | 6.45 | 18.78 | 0.18 |
| 7 | 4.69 | 21.71 | 0.32 |

| | | | |
|---|---|---|---|
| *) given g/l Ni²⁺ | | | |

### Reference Numerals:

- 100: electroplating tank
- 101: sensing probe
- 200: rinsing device
- 210: drag-in rinse tank
- 220: intermediate rinse tank
- 230: fresh-water rinse tank
- 240: fresh water supply pipe
- 241: valve at fresh water supply pipe 240
- 250: overflow compartment at drag-in rinse tank 210
- 260: dosing means
- 261: dosing pump
- 262: pH sensing means
- 270: overflow compartment at intermediate rinse tank 220
- 300: filtration unit
- 310: booster pump
- 311: valves at booster pump 310
- 312: inlet-flow indicator
- 313: pressure gauge
- 320: pre-filter
- 321: pressure gauge
- 330: high-pressure pump
- 331: pressure gauge
- 340: filtration devices
- 341: filtration tube
- 342: filtration tube
- 350: closed-loop pipe in filtration unit 300
- 351: valve in closed-loop 350
- 352: valve in closed-loop 350
- 353: pressure switch
- 400: auxiliary tank
- 410: sensing probe
- 500: recuperation tank
- 550: electrochemical deposition means
- 551: cathode
- 552: anode
- 600: regeneration tank
- 610: return pipe from regeneration tank 600 to filtration unit 300
- 611: valve at return pipe 610
- 612: valve at return pipe 610
- 620: return pipe from filtration unit 300 ((concentrate) to regeneration tank
- 621: valve at return pipe 620
- 630: return pipe from filtration unit 300 (permeate) to regeneration tank
- 631: valve at return pipe 630
- 632: valve
- 700: second fluid connection device
- 710: pipe of second fluid connection device 700
- 711: valve at pipe 710
- 800: first fluid connection device
- 810: pipe of first fluid connection device 800
- 820: pipe of first fluid connection device 800
- 821: valve at pipe 820
- 822: valve at pipe 820
- 900: third fluid connection device
- 910: pipe of third fluid connection device 900
- 911: valve at pipe 910
- 912: valve at pipe 910
- 920: pipe of third fluid connection device 900
- 921: valve at pipe 920
- 922: valve at pipe 920
- 930: pump at pipe 920
- 940: junction
- 941: valve at junction 940
- 1010: pipe to waste treatment facility
- 1011: valve at pipe 1010
- 1020: pipe to waste treatment facility
- 1021: valve at pipe 1020
- 1030: pipe to waste treatment facility
- 1031: valve at pipe 1030
- 1100: atmospheric evaporator device
- 1110: pump at pipe 1120
- 1120: pipe from treatment tank 100 to atmospheric evaporator device 1100
- 1130: pipe from atmospheric evaporator device 1100 to treatment tank 100

## Claims

1. An apparatus for rinsing off liquid from work pieces which have been treated in a treatment bath, the apparatus comprising:
a) at least one rinsing device (200);
b) at least one filtration unit (300);
c) at least one first fluid connection device (800) between the at least one rinsing device (200) and the at least one filtration unit (300) for transferring a rinse liquid from the at least one rinsing device (200) to the at least one filtration unit (300); and
d) at least one second fluid connection device (700) between the at least one filtration unit (300) and the at least one rinsing device (200) for transferring a permeate liquid from the at least one filtration unit (300) to the at least one rinsing device (200);
**characterized in that** the device further comprises:
e) at least one third fluid connection device (900) between the at least one filtration unit (300) and the treatment bath for transferring a concentrate liquid from the at least one filtration unit (300) to the treatment bath.

2. The apparatus of claim 1, **characterized in that** at least one filtration unit (300) is selected from the group comprising a nanofiltration unit and a reverse osmosis unit.

3. The apparatus of any one of the preceding claims, **characterized in that** the at least one filtration unit (300) comprises a high-pressure pump (330) and at least one filtration device (340) downstream from the high-pressure pump (330).

4. The apparatus of claim 3, **characterized in that** the at least one filtration unit (300) further comprises a booster pump (310) and a pre-filter (320) downstream from the booster pump (310).

5. The apparatus of any one of the preceding claims, **characterized in that** the at least one rinsing device (200) comprises a cascade of a fresh-water rinse tank (230), an intermediate rinse tank (220) and a drag-in rinse tank (210).

6. The apparatus of claim 5, **characterized in that** the second fluid connection device (700) is provided between the at least one filtration unit (300) and one of the fresh-water rinse tank (230) and the drag-in rinse tank (210).

7. The apparatus of any one of the preceding claims, **characterized in that** a regeneration tank (600) is provided, said regeneration tank (600) being connected via at least one fourth fluid connection device (610, 630) to the at least one filtration unit (300).

8. The apparatus of any one of the preceding claims, **characterized in that** the treatment bath is an electroplating bath.

9. The apparatus of claim 8, **characterized in that** the electroplating bath is a nickel electroplating bath.

10. The apparatus of any one of claims 8 and 9, **characterized in that** the at least one rinsing device (200) comprises a cascade of a fresh-water rinse tank (230), an intermediate rinse tank (220) and a drag-in rinse tank (210) and that means for dosing (260) an acid to the drag-in rinse tank (210) are provided.

11. The apparatus of any one of the preceding claims, **characterized in that** an auxiliary tank (400) is provided, said auxiliary tank (400) being connected via fluid connection devices (810, 820, 910, 920) to the at least one filtration device (300), to the at least one rinsing device (200) and to the treatment bath.

12. The apparatus of claim 11, **characterized in that** a recuperation tank (500) for metal is provided, said recuperation tank (500) being connected via fluid connection devices (920, 940) to the auxiliary tank (400).

13. The apparatus of claim 12, **characterized in that** the recuperation tank (500) is equipped with an electrochemical deposition means (550).

14. The apparatus of any one of the preceding claims, **characterized in that** an atmospheric evaporator device (1100) is provided, said atmospheric evaporator device (1100) being connected via a fluid connection device (1120, 1130) to the treatment bath.

15. A method of rinsing off liquid from work pieces which have been treated in a treatment bath, the method comprising:
a) rinsing a work piece with a rinse liquid, said liquid being contained in at least one rinsing station;
b) transferring the rinse liquid to at least one filtration unit (300);
c) conveying the rinse liquid through the at least one filtration unit (300), so that a permeate liquid and a concentrate liquid are generated; and
d) transferring the permeate liquid from the at least one filtration unit (300) to the at least one rinsing station;
**characterized in that** the method further comprises:
a) transferring the concentrate liquid from the at least one filtration unit (300) to the treatment bath.

16. The method of claim 15, **characterized in that** at least one filtration unit (300) is selected from the group comprising a nanofiltration unit and a reverse osmosis unit.

17. The method of any one of claims 15 and 16, **characterized in that** the rinse liquid is transferred through a cascade of a fresh-water rinse tank (230), an intermediate rinse tank (220) and a drag-in rinse tank (210) in a direction opposite to a direction the work piece is conveyed successively to the rinse tanks (200).

18. The method of claim 17, **characterized in that** the permeate liquid is delivered to one of the fresh-water rinse tank (230) and the drag-in rinse tank (210).

19. The method of any one of claims 15 - 18, **characterized in that** the treatment bath is an electroplating bath.

20. The method of claim 19, **characterized in that** the electroplating bath is a nickel electroplating bath.

21. The method of any one of claims 15 - 20, **characterized in that** the concentrate liquid is circulated between the filtration unit (300) and an auxiliary tank (400).

22. The method of claim 21, **characterized in that** the concentrate liquid contained in the auxiliary tank (400) is delivered to the treatment bath, if the concentration of a predetermined chemical species contained in the concentrate liquid exceeds a minimum threshold value.

23. The method of claim 21, **characterized in that** the concentrate liquid is delivered to a recuperation tank (500) and in the recuperation tank (500) a main component contained in the concentrate liquid is separated from the concentrate liquid.

24. The method of any one of claims 15 - 23, **characterized in that** the rinse liquid is conveyed through a cascade of a fresh-water rinse tank (230), an intermediate rinse tank (220) and a drag-in rinse tank (210) in a direction opposite to a direction the work piece is conveyed successively to the rinse tanks (200) and that an acid is dosed to the drag-in rinse tank (210) to provide a predetermined pH of the rinse liquid.

25. The method of any one of claims 15 - 24, **characterized in that** the at least one filtration unit (300) comprises filtration devices (340) and that the filtration devices (340) are regenerated by flushing the devices with a regenerant.
